# EUROPEAN PATENT SPECIFICATION

(11) **EP 1 154 628 B1**
(45) Date of publication and mention of the grant of the patent: **15.08.2007**
(21) Application number: 00109976.1
(22) Date of filing: 11.05.2000
(51) Int. Cl.: H04M 19/04

(54) **Signalizing an incoming call from a mobile phone to a portable stereo set**
Anzeigen eines ankommenden Anrufes von ein Mobiltelefon zu einem tragbaren Audiogerät
Indication d'un appel entrant depuis un téléphone portable jusqu'à un appareil audio

(43) Date of publication of application: 14.11.2001
(73) Proprietor: Sony Deutschland GmbH, 10785 Berlin (DE)
(72) Inventor: Badtke, Rainer, c/o Sony Internat. (Europe) GmbH, Heisenbergbogen 1, 85609 Aschheim (DE)
(74) Representative: Körber, Martin Hans

(56) References cited:
- WO-A-00/10311
- GB-A- 2 308 775
- GB-A- 2 343 080
- PATENT ABSTRACTS OF JAPAN vol. 1999, no. 11, 30 September 1999 (1999-09-30) & JP 11 154994 A (EAGER:KK), 8 June 1999 (1999-06-08)

## Description

The present invention relates to a portable communication device for a wireless communication system, with a wireless interface for sending and receiving signalling data to and from a portable audio device.

Further, the present invention relates to a portable audio device for playing audio data, with a wireless interface for sending and receiving signalling data to and from a portable communication device.

The present invention relates also to a method for signalizing an incoming call from a portable communication device for a wireless communication system to a portable audio device for playing audio data.

The use of portable communication devices, e.g. mobile terminals for the GSM or the UMTS-system, is wide spread. The same is true for portable audio devices, e.g. walkmen, discmen and the like. Portable audio devices are in most cases used with earphones or headphones.

However, if a user listens to music over the earphones or the headphones of the audio device while carrying a portable communication device, it is difficult for the user to recognize an alert signal (for example an alert tone) signalizing an incoming call in the portable communication device.

WO 00/10311 discloses a system enabling a telephone communication through an audio equipment device. Hereby, an audio interface module for an operative connection between a car radio and a cell phone is supposed to enable the usage of the cell phone through the car radio. If the cell phone receives an incoming call, either the cell phone itself rings or a ringer in the interface module alerts the user. The user, upon hearing the ringer, presses a button so that audio output signals are transferred from the cell phone via the interface module to the audio equipment device. In another embodiment, the interface module automatically transmits a ringer signal indicating an incoming call to speakers of the audio equipment device. The interface module can be fitted either wirelessly or with wires between the audio equipment device and a radio transceiver. In a further embodiment, the functionality of the interface module can be incorporated into the audio equipment device, which is e.g. a car radio.

JP 11-154994 discloses a system in which an incoming call received by a portable telephone is detected and informed to a user using a headphone of a portable acoustic device. Upon the reception of an incoming call in the portable telephone set, an alert signal is produced, wirelessly transmitted to a portable phone call information device connected to the portable acoustic device and an alert signal is output to the user through the headphones. Hereby, a special portable phone call information device is required to be connected to the portable acoustic device. The portable phone call information device operates on the basis of the wireless communication system and directly receives an incoming call at the same time as the portable telephone.

It is therefore the object of the present invention, to provide a portable communication device for a wireless communication system, which allows to signalise an alert signal of the portable communication device for a wireless communication system to the user of a portable audio device.

The above object is achieved by a portable communication device for a wireless communication system according to claim 1.

Further, it is the object of the present invention, to provide a portable audio device, which allows to signalise an alert signal of a portable communication device for a wireless communication system to the user of the portable audio device.

This object is achieved by a portable audio device according to claim 6.

It is also the object of the present invention, to provide a method for signalizing an incoming call from a portable communication device to a portable audio device for playing audio data.

This object is achieved by a method for signalizing an incoming call from a portable communication device for a wireless communication system to a portable audio device according to claim 11.

According to the present invention, the portable communication device for a wireless communication system with the attached or built in wireless interface is able to address one or more of portable audio devices, like a walkman, a portable CD player, etc., for sending and receiving special signalling data from and to these devices.

The sending and receiving of special signalling data from and to audio devices according to the present invention has the advantage that the user of a portable communication device, like a mobile telephone, and a portable audio device, like a walkman, could be informed about an incoming call of the portable communication device even if the user is listening to music, for example over the headphones of a portable audio device.

In one embodiment of the present invention, the generating means of the portable communication device according to the present invention generates stop alert signalling data, if the incoming call of the portable communication device is interrupted. This stop alert signalling data contains a stop alert command for causing said audio device to stop outputting said alert signal. The stop alert signalling data are sent to the audio device by the wireless interface.

The portable communication device comprises an outputting means, like a loudspeaker, for outputting an alert signal upon the incoming call. The output means can either output an output signal additional to the output signal of the audio device or it can only output an alert signal, if the audio device is not active.

According to the present invention, the portable audio device generates an alert signal upon receiving start alert signalling data and outputs the alert signal via an outputting means, for example the headphones of a portable audio device.

In one embodiment of the present invention, the generating means starts outputting the alert signal upon receiving the start alert signalling data and stops outputting the alert signal upon receiving stop alert signalling data containing a stop alert command.

Advantageously, the generating means causes the portable audio device to stop or to mute the audio data, for example the music, upon receiving the start alert signalling data.

In one embodiment of the present invention the alert signal is an alert tone.

The wireless interface of the portable communication device and of the portable audio device bases advantageously on the bluetooth technology. Bluetooth-interfaces are known and used for short range transmission, e.g. in house applications. The advantage of bluetooth interfaces are, that they are small in size, easy to implement and cheap.

In the following description, a preferred embodiment of the present invention is explained in more detail in relation to the enclosed Figures in which
figure 1 shows a schematic bloc diagram of a portable communication device for a wireless communication system and a portable audio device according to the present invention,
figure 2 shows a diagram of the process of signalizing an incoming call, and
figure 3 shows a diagram of the process of signalizing an interrupted call.

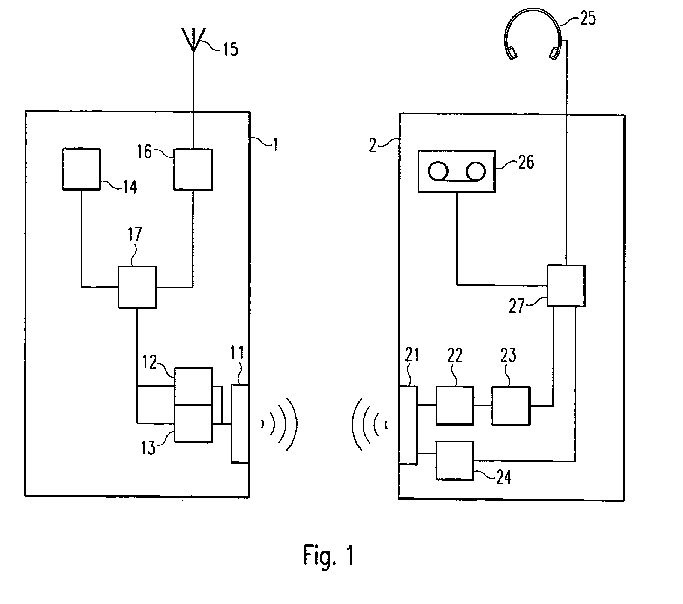

Figure 1 shows a schematic block diagram of a portable communication device 1 which is for example a mobile telephone for a wireless communication system as for example the GSM or UMTS system. The portable communication device 1 comprises a wireless interface 11, which is different from and has a shorter transmission range than the interface of the wireless communication system, which is represented by an antenna 15 and a transmitting and receiving means 16. The portable communication device 1 further comprises generating means 12 for generating request signalling data upon an incoming call and for generating start alert signalling data and stop alert signalling data, receiving means 13 for receiving response signalling data ; these signalling data are sent and received via the wireless interface 11.

An alert signal like an alert tone to signalise an incoming call is output by an output means 14 (for example loudspeaker). The portable communication device 1 also comprises a processing means 17 for controlling the operations of the portable communication device 1 like sending and receiving signalling data, outputting an alert signal, etc.

Figure 1 also shows a schematic block diagram of the portable audio device 2 like a walkman or a CD player. The portable audio device comprises a wireless interface 21 for sending and receiving signalling data to and from the portable communication device 1, receiving means 22 for receiving start alert signalling data, generating means 23 for generating an alert signal and status means 24 for generating and sending response signalling data; these signalling data are sent and received via the wireless interface 21.

The portable audio device 2 further comprises an outputting means 25 for outputting audio data (for example music) stored on for example a tape 26 or a compact disc. The outputting means 25 are for example headphones or loudspeakers.

The portable audio device 2 also comprises a processing means 27 for controlling the operations of the portable audio device 2, like sending and receiving signalling data, playing audio data, outputting an alert signal etc.

It is to be noted that the portable communication device 1 and the portable audio device schematically shown in Figure 1 further comprise a plurality of elements necessary for its operation like display means, inputting means, clock means, coding/decoding means and the like.

The bluetooth technology enables multiple devices to communicate with each other using a common set of standards when they are within range. Before the portable communication device 1 can send and receive signalling data to and from one or more portable audio devices 2, it is necessary to enable at least one of these audio devices 2 to the communication device 1 to make sure that the communication device 1 can address the at least audio device via the wireless interface (bluetooth-interface). That means, that , for example, one audio device in the bluetooth environment could be interrupted upon an incoming call while another device could not be interrupted in this case. Therefore, the communication device 1 has to be introduced to the individual audio devices individually in an appropriate way according to the bluetooth specifications for such a procedure.

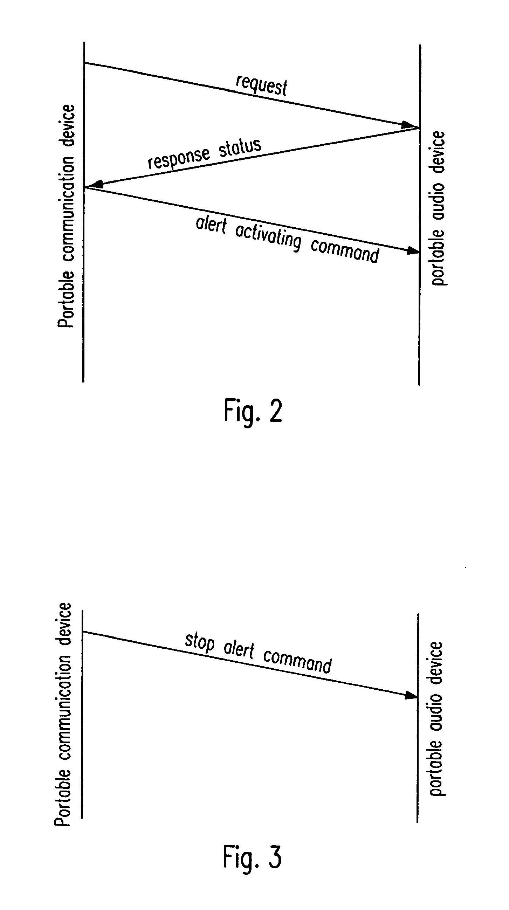

Figure 2 shows a diagram of the process of transmitting signalling data upon the reception of an incoming call of a portable communication device 1 (see also Figure 1).

When the communication device 1 receives an incoming call and one or more portable audio devices 2 have been introduced to the portable communication device 1 as described above, the generating means 12 of the communication device 1 will generate and send request signalling data (request) containing a request for determining the activity of the audio device 2, that means, that if the audio device is playing audio data or not.

After receiving the request signalling data, the status means 24 generates and sends response signalling data (response status) containing information about the activity of the audio device 2, that means, that if the audio device 2 is playing audio data or not.

If the portable audio device is switched off or not playing audio data at the moment, the status means 24 generates and sends an idle message via the wireless interface 21 to the communication device 1 indicating that the audio device 2 is currently not in use. The communication device 1 will then start outputting an alert signal via the outputting means 14.

If the audio device is active (for example playing music) at the time when the communication device 1 receives an incoming call, the status means 24 generates and sends a busy message via the wireless interface 21 to the communication device 1 upon receiving the request signalling data. As a result to this busy message the generating means of the communication device 1 sends start alert signalling data (alert activating command) to the audio device 1. After receiving the start alert signalling data by the receiving means 22 of the audio device 2, the generating means 23 generates an alert signal and outputs the alert signal by the outputting means 25.

The alert signal can be, for example, an alert tone and/or muting the loudness of the output audio data.

Figure 3 shows a diagram of the process of transmitting signalling data upon an interrupt of the incoming call of the portable communication device 1.

If the communication device 1 terminates the call or the call is interrupted by any means or the call is in progress, the generating means 12 of the communication device 1 will send stop alert command to the audio device 2 if the audio device 2 is still switched on and if the audio device 2 has been playing the alert signal before.

## Claims

1. Portable communication device (1) for a wireless communication system, with a wireless interface (11) for sending and receiving signaling data to and from a portable audio device (2), whereby said wireless interface (11) is different from and has a shorter transmission range than said wireless communication system,
generating means (12) for generating upon the reception of an incoming call in said wireless communication system request signaling data containing a request for determining if said audio device (2) is playing audio data or not and for sending said request signaling data to the audio device (2) via said wireless interface (11),
receiving means (13) for receiving response signaling data from said audio device (2) via said wireless interface (11), whereby said response signaling data contains information if said audio device (2) is playing audio data or not, whereby
said generating means (12) generates, if said audio device (2) is active, start alert signaling data containing an alert activating command for causing said audio device (2) to output an alert signal and sends said start alert signaling data to said audio device (2).

2. Portable communication device (1) according to claim 1,
wherein said generating means (12) generates, if the incoming call of the portable communication device (1) is interrupted, stop alert signaling data, containing a stop alert command for causing said audio device (2) to stop outputting said alert signal and sends said stop alert signaling data via the wireless interface (11) to said audio device (2).

3. Portable communication device (1) according to claim 1 or 2,
comprising an output means (14) for outputting upon the reception of said incoming call an alert signal indicating said incoming call to a user.

4. Portable communication (1) device according to claim 3,
wherein said output means (14) outputs said alert signal only if the audio device (2) is not active.

5. Portable communication device (1) according to one of the claims 1 to 4,
wherein said wireless interface (11) sends and transmits data on the basis of the bluetooth technology.

6. Portable audio device (2) for playing audio data, with
a wireless interface (21) for sending and receiving signaling data to and from a portable communication device (1),
receiving means (22) for receiving request signaling data from said portable communication device (1),
status means (24) for generating and transmitting via said wireless interface (21) response signaling data containing information if the audio device (2) is playing audio data or not to the portable communication device in response to received request signaling data,
wherein said receving means (22) is further adapted to receive start alert signaling data containing an alert activating command,
said portable audio device (2) further comprising generating means (23) for generating an alert signal upon receiving said start alert signaling data and outputting said alert signal via an outputting means (25).

7. Portable audio device (2) according to claim 6,
wherein said generating means (23) stops outputting said alert signal upon receiving stop alert signaling data containing a stop alert command.

8. Portable audio device (2) according claim 6 or 7,
wherein said wireless interface (21) sends and transmits data on the basis of the bluetooth technology.

9. Portable audio device (2) according to one of the claims 6 to 8,
wherein said alert signal from said generating means (23) is the stop of an output of audio data via said output means (25).

10. Portable audio device (2) according to one of the claims 6 to 10,
wherein said generating means (23) generates and outputs an audible alert signal upon receiving said start alert signaling data.

11. Method for signalizing an incoming call from
a portable communication device (1) for a wireless communication system to a a portable audio device (2) for playing audio data,
comprising the steps of
generating request signaling data upon the reception of an incoming call in said portable communication device (1) and sending said request signaling data to said portable audio device (2) via a wireless interface which is different from and has a shorter transmission range than said wireless communication system,
generating and transmitting via said wireless interface response signaling data containing information if the portable audio device (2) is playing audio data or not from the portable audio device (2) to the portable communication device in response to received request signaling data,
generating in said portable communication device (1), upon receipt of signaling data indicating that said portable audio device (2) is playing audio data, start alert signaling data containing an alert activating command,
receiving said start alert signaling data by said audio device (2), and
generating and outputting an alert signal by said portable audio device (2) upon receiving said start alert signaling data.

12. Method according to claim 11,
comprising generating stop alert signaling data by said portable communication device (1) upon interrupting said incoming call and sending said stop alert signaling data to said audio device (2) for causing the audio device (2) stop outputting said alert signal.

## Patentansprüche

1. Tragbare Kommunikationsvorrichtung (1) für ein drahtloses Kommunikationssystem, mit
einer drahtlosen Schnittstelle (11) zum Senden und Empfangen von Signalisierungsdaten zu und von einer tragbaren Audio-Vorrichtung (2), wobei sich die drahtlose Schnittstelle (11) von dem drahtlosen Kommunikationssystem unterscheidet und eine kürzere Übertragungsreichweite als dasselbe hat,
einer Erzeugungseinrichtung (12) zum Erzeugen von Anfrage-Signalisierungsdaten, die eine Anfrage zum Bestimmen, ob die Audio-Vorrichtung (2) Audio-Daten abspielt oder nicht, enthalten, nach dem Empfang eines ankommenden Anrufs in dem drahtlosen Kommunikationssystem und zum Senden der Anfrage-Signalisierungsdaten zu der Audio-Vorrichtung (2) über die drahtlose Schnittstelle (11),
einer Empfangseinrichtung (13) zum Empfangen von Antwort-Signalisierungsdaten von der Audio-Vorrichtung (2) über die drahtlose Schnittstelle (11), wobei die Antwort-Signalisierungsdaten Informationen, ob die Audio-Vorrichtung (2) Audio-Daten abspielt oder nicht, enthalten, wobei
die Erzeugungseinrichtung (12), wenn die Audio-Vorrichtung (2) aktiv ist, Startalarmierungs-Signalisierungsdaten erzeugt, die einen Alarmierungsaktivierungsbefehl zum Bewirken, dass die Audio-Vorrichtung (2) ein Alarmierungssignal ausgibt und die Startalarmierungs-Signalisierungsdaten zu der Audio-Vorrichtung (2) sendet, enthalten.

2. Tragbare Kommunikationsvorrichtung (1) nach Anspruch 1,
bei der die Erzeugungseinrichtung (12), wenn der ankommende Anruf der tragbaren Kommunikationsvorrichtung (1) unterbrochen wird, Stoppalarmierungs-Signalisierungsdaten erzeugt, die einen Alarmierungsstoppbefehl zum Bewirken, dass die Audio-Vorrichtung (2) ein Ausgeben des Alarmierungssignals stoppt, enthalten, und die Stoppalarmierungs-Signalisierungsdaten über die drahtlose Schnittstelle (11) zu der Audio-Vorrichtung (2) sendet.

3. Tragbare Kommunikationsvorrichtung (1) nach Anspruch 1 oder 2,
die eine Ausgabeeinrichtung (14) zum Ausgeben eines Alarmierungssignals, das einem Benutzer den ankommenden Anruf anzeigt, nach dem Empfang des ankommenden Anrufs aufweist.

4. Tragbare Kommunikationsvorrichtung (1) nach Anspruch 3,
bei der die Ausgabeeinrichtung (14) das Alarmierungssignal lediglich ausgibt, wenn die Audio-Vorrichtung (2) nicht aktiv ist.

5. Tragbare Kommunikationsvorrichtung (1) nach einem der Ansprüche 1 bis 4,
bei der die drahtlose Schnittstelle (11) Daten auf der Basis der Bluetooth-Technologie sendet und überträgt.

6. Tragbare Audio-Vorrichtung (2) zum Abspielen von Audio-Daten, mit
einer drahtlosen Schnittstelle (21) zum Senden und Empfangen von Signalisierungsdaten zu und von einer tragbaren Kommunikationsvorrichtung (1), einer Empfangseinrichtung (22) zum Empfangen von Anfrage-Signalisierungsdaten von der tragbaren Kommunikationsvorrichtung (1),
einer Statuseinrichtung (24) zum Erzeugen und Übertragen, ansprechend auf empfangene Anfrage-Signalisierungsdaten, von Antwort-Signalisierungsdaten, die Informationen, ob die Audio-Vorrichtung (2) Audio-Daten abspielt oder nicht, enthalten, zu der tragbaren Kommunikationsvorrichtung über die drahtlose Schnittstelle (21),
wobei die Empfangseinrichtung (22) ferner angepasst ist, um Startalarmierungs-Signalisierungsdaten, die einen Alarmierungsaktivierungsbefehl enthalten, zu empfangen,
wobei die tragbare Audio-Vorrichtung (2) ferner eine Erzeugungseinrichtung (23) zum Erzeugen eines Alarmierungssignals nach einem Empfangen der Startalarmierungs-Signalisierungsdaten und zum Ausgeben des Alarmierungssignals über eine Ausgabeeinrichtung (25) aufweist.

7. Tragbare Audio-Vorrichtung (2) nach Anspruch 6,
bei der die Erzeugungseinrichtung (23) nach einem Empfangen von Stoppalarmierungs-Signalisierungsdaten, die einen Alarmierungsstoppbefehl enthalten, das Ausgeben des Alarmierungssignals stoppt.

8. Tragbare Audio-Vorrichtung (2) nach Anspruch 6 oder 7,
bei der die drahtlose Schnittstelle (21) Daten auf der Basis der Bluetooth-Technologie sendet und überträgt.

9. Tragbare Audio-Vorrichtung (2) nach einem der Ansprüche 6 bis 8,
bei der das Alarmierungssignal von der Erzeugungseinrichtung (23) der Stopp einer Ausgabe von Audio-Daten über die Ausgabeeinrichtung (25) ist.

10. Tragbare Audio-Vorrichtung (2) nach einem der Ansprüche 6 bis 9,
bei der die Erzeugungseinrichtung (23) nach einem Empfangen der Startalarmierungs-Signalisierungsdaten ein hörbares Alarmierungssignal erzeugt und ausgibt.

11. Verfahren zum Ankündigen eines ankommenden Anrufs von
einer tragbaren Kommunikationsvorrichtung (1) für ein drahtloses Kommunikationssystem zu einer tragbaren Audio-Vorrichtung (2) zum Abspielen von Audio-Daten, das folgende Schritte aufweist:
Erzeugen von Anfrage-Signalisierungsdaten nach dem Empfang eines ankommenden Anrufs in der tragbaren Kommunikationsvorrichtung (1) und Senden der Anfrage-Signalisierungsdaten zu der tragbaren Audio-Vorrichtung (2) über eine drahtlose Schnittstelle, die sich von dem drahtlosen Kommunikationssystem unterscheidet und eine kürzere Übertragungsreichweite als dasselbe hat,
Erzeugen und Übertragen, ansprechend auf empfangene Anfrage-Signalisierungsdaten, von Antwort-Signalisierungsdaten, die Informationen, ob die tragbare Audio-Vorrichtung (2) Audio-Daten abspielt oder nicht, enthalten, von der tragbaren Audio-Vorrichtung (2) zu der tragbaren Kommunikationsvorrichtung über die drahtlose Schnittstelle,
Erzeugen von Startalarmierungs-Signalisierungsdaten, die einen Alarmierungsaktivierungsbefehl enthalten, in der tragbaren Kommunikationsvorrichtung (1) nach einem Empfang von Signalisierungsdaten, die anzeigen, dass die tragbare Audio-Vorrichtung (2) Audio-Daten abspielt,
Empfangen der Startalarmierungs-Signalisierungsdaten durch die Audio-Vorrichtung (2) und
Erzeugen und Ausgeben eines Alarmierungssignals durch die tragbare Audio-Vorrichtung (2) nach einem Empfangen der Startalarmierungs-Signalisierungsdaten.

12. Verfahren nach Anspruch 11,
das ein Erzeugen von Stoppalarmierungs-Signalisierungsdaten durch die tragbare Kommunikationsvorrichtung (1) nach einem Unterbrechen des ankommenden Anrufs und ein Senden der Stoppalarmierungs-Signalisierungsdaten zu der Audio-Vorrichtung (2) zum Bewirken, dass die Audio-Vorrichtung (2) das Ausgeben des Alarmierungssignals stoppt, aufweist.

## Revendications

1. Dispositif de communication portable (1) pour un système de communication sans fil, comportant
une interface sans fil (11) pour envoyer et recevoir des données de signalisation à et depuis un dispositif audio portable (2), dans lequel ladite interface sans fil (11) est différente de et possède une plage de transmission plus courte que ledit système de communication sans fil,
un moyen de génération (12) pour générer, lors de la réception d'un appel entrant dans ledit système de communication sans fil, des données de signalisation de demande contenant une demande pour déterminer si ledit dispositif audio (2) lit les données audio ou non et pour envoyer lesdites données de signalisation de demande au dispositif audio (2) par l'intermédiaire de ladite interface sans fil (11),
un moyen de réception (13) pour recevoir les données de signalisation de réponse depuis ledit dispositif audio (2) par l'intermédiaire de ladite interface sans fil (11), où lesdites données de signalisation de réponse contiennent une information si ledit dispositif audio (2) lit les données audio ou non, où
ledit moyen de génération (12) génère, si ledit dispositif audio (2) est actif, des données de signalisation d'alerte de début contenant une commande d'activation d'alerte pour amener ledit dispositif audio (2) à délivrer un signal d'alerte et envoie lesdites données de signalisation d'alerte de début audit dispositif audio (2).

2. Dispositif de communication portable (1) selon la revendication 1, dans lequel ledit moyens de génération (12) génère, si l'appel entrant du dispositif de communication portable (1) est interrompu, des données de signalisation d'alerte d'arrêt, contenant une commande d'alerte d'arrêt pour amener ledit dispositif audio (2) à arrêter la délivrance dudit signal d'alerte et envoie lesdites données d'alerte d'arrêt par l'intermédiaire de l'interface sans fil (11) audit dispositif audio (2).

3. Dispositif de communication portable (1) selon la revendication 1 ou 2, comportant un moyen de sortie (14) pour délivrer, lors de la réception dudit appel entrant, un signal d'alerte indiquant ledit appel entrant à un utilisateur.

4. Dispositif de communication portable (1) selon la revendication 3, dans lequel ledit moyen de sortie (14) délivre ledit signal d'alerte seulement si le dispositif audio (2) n'est pas actif.

5. Dispositif de communication portable (1) selon l'une des revendications 1 à 4, dans lequel ladite interface sans fil (11) envoie et transmet les données en fonction de la technologie Bluetooth.

6. Dispositif audio portable (2) pour lire des données audio, comportant
une interface sans fil (21) pour envoyer et recevoir des données de signalisation à et depuis un dispositif de communication portable (1),
des moyens de réception (22) pour recevoir des données de signalisation de demande depuis ledit dispositif de communication portable (1),
un moyen d'état (24) pour générer et transmettre par l'intermédiaire de ladite interface sans fil (21) des données de signalisation de réponse contenant l'information si le dispositif (2) lit les données audio ou non au dispositif de communication portable en réponse auxdites données de signalisation de demande reçues,
dans lequel ledit moyen de réception (22) est en outre adapté pour recevoir des données de signalisation d'alerte de début contenant une commande d'activation d'alerte,
ledit dispositif audio portable (2) comportant en outre un moyen de génération (23) pour générer un signal d'alerte lors de la réception desdites données de signalisation d'alerte de début et délivrer ledit signal d'alerte par l'intermédiaire d'un moyen de sortie (25).

7. Dispositif audio portable (2) selon la revendication 6, dans lequel ledit moyen de génération (23) arrête la délivrance dudit signal d'alerte lors de la réception des données de signalisation d'alerte d'arrêt contenant une commande d'alerte d'arrêt.

8. Dispositif audio portable (2) selon la revendication 6 ou 7, dans lequel ladite interface sans fil (21) envoie et transmet les données en fonction de la technologie Bluetooth.

9. Dispositif audio portable (2) selon l'une des revendications 6 à 8, dans lequel ledit signal d'arrêt provenant dudit moyen de génération (23) est l'arrêt d'une délivrance de données audio par l'intermédiaire du moyen de sortie (25).

10. Dispositif audio portable (2) selon l'une des revendications 6 à 9, dans lequel ledit moyen de génération (23) génère et délivre un signal d'alerte audible lors de la réception desdites données de signalisation d'alerte de début.

11. Procédé de signalisation d'un appel entrant provenant
d'un dispositif de communication portable (1) pour un système de communication sans fil à
un dispositif audio portable (2) pour lire les données audio,
comportant les étapes consistant à
générer des données de signalisation de demande lors de la réception d'un appel entrant dans ledit dispositif de communication portable (1) et envoyer lesdites données de signalisation de demande audit dispositif audio portable (2) par l'intermédiaire d'une interface sans fil qui est différente de et qui possède une plage de transmission plus courte que ledit système de communication sans fil,
générer et transmettre par l'intermédiaire de ladite interface sans fil les données de signalisation contenant l'information si le dispositif audio portable (2) lit les données audio ou non depuis le dispositif audio portable (2) au dispositif de communication portable en réponse aux données de signalisation de demande reçues,
générer dans ledit dispositif de communication portable (1), lors de la réception des données de signalisation indiquant que ledit dispositif audio portable (2) lit les données audio, des données de signalisation d'alerte de début contenant une commande d'activation d'alerte,
recevoir lesdites données de signalisation d'alerte de début par ledit dispositif audio (2), et générer et délivrer un signal d'alerte par ledit dispositif audio portable (2) lors de la réception desdites données de signalisation d'alerte de début.

12. Procédé selon la revendication 11, comportant la génération de données de signalisation d'alerte d'arrêt par ledit dispositif de communication portable (1) lors de l'interruption dudit appel entrant et l'envoi desdites données de signalisation d'alerte d'arrêt audit dispositif audio (2) pour amener le dispositif audio (2) à arrêter ledit signal d'alerte.
